# EUROPEAN PATENT APPLICATION

(11) **EP 4 190 557 A1**
(43) Date of publication of application: **07.06.2023**
(21) Application number: 22210364.0
(22) Date of filing: 29.11.2022
(51) Int. Cl.: B32B 18/00, C04B 35/80, F01D 5/00

(54) **MACHINING OF CERAMIC MATRIX COMPOSITE DURING PREFORMING AND PARTIAL DENSIFICATION**

(30) Priority: 03.12.2021 US 202117541819
(71) Applicant: Raytheon Technologies Corporation, Farmington, CT 06032 (US)
(72) Inventor: SCHNEIDER, Kendall J., Middletown, 06457 (US); BARRON, Alan C., Jupiter, 33458 (US); COLBY, Mary, West Hartford, 06117 (US)
(74) Representative: Dehns

(57) **Abstract**

A method of forming a component for a gas turbine engine using ceramic matrix composites (CMCs) is provided. The method includes preforming the aerodynamic component into an initial desired shape using the CMCs, executing partial densification of the CMCs, repeating the preforming operations and the executing of the partial densification until a final desired shape of the aerodynamic component is achieved, machining or cutting the CMCs during one or more of the preforming operations and the executing of the partial densification to remove defects from the CMCs and executing a full densification of the CMCs.

## Description

### BACKGROUND

Recently, CMCs have been proposed as materials for components of gas turbine engines, such as blades and vanes. CMCs are a subgroup of composite materials and a subgroup of ceramics. They include ceramic fibers embedded in a ceramic matrix. The ceramic fibers and the matrix both can include any ceramic material. As compared to metallic materials that have been traditionally used in gas turbine engines, CMCs can offer improved strength and heat resistance as well as reduced weight.

When CMCs are used as materials for gas turbine engine components, such as blades and vanes, CMCs are generally laid down in various patterns over mandrels or other support structures in order to form the blade or vane shapes. The CMCs are then repeatedly compressed and heated until the desired blade or vane shape is achieved.

While CMCs offer certain advantages over metallic materials for gas turbine engine components, such as blade and vanes, the formation process remains difficult to perform and broken fibers on the surface of preforms can create defects that need to be addressed prior to full densification. Previously, this issue has been handled manually, using machining tools that are inherently messy and require significant cleanup, and often resulted in less than optimal results.

### BRIEF DESCRIPTION

According to an aspect of the disclosure, a method of forming a component for a gas turbine engine using ceramic matrix composites (CMCs) is provided. The method includes preforming the aerodynamic component into an initial desired shape using the CMCs, executing partial densification of the CMCs, repeating the preforming operations and the executing of the partial densification until a final desired shape of the aerodynamic component is achieved, machining or cutting the CMCs during one or more of the preforming operations and the executing of the partial densification to remove defects from the CMCs and executing a full densification of the CMCs.

In accordance with additional or alternative embodiments, the defects include broken CMC fibers and the machining or cutting of the CMCs includes automatically identifying the defects for removal.

In accordance with additional or alternative embodiments, the machining or cutting of the CMCs includes autonomous adaptive machining.

In accordance with additional or alternative embodiments, the autonomous adaptive machining includes robotically applying a machining tool or a CNC cutting tool to an exterior surface of the CMCs.

In accordance with additional or alternative embodiments, the machining tool is configured to achieve an aerodynamically smooth finish of the exterior surface.

In accordance with additional or alternative embodiments, the machining tool is abrasive.

In accordance with additional or alternative embodiments, the method further includes sensing a force applied by the machining tool against the exterior surface and dynamically adjusting the force of the machining tool against the exterior surface.

In accordance with additional or alternative embodiments, the method further includes re-machining or re-cutting the CMCs following the executing of the full densification of the CMCs.

In accordance with additional or alternative embodiments, the aerodynamic component is a blade or a vane of a gas turbine engine and the method further includes machining or cutting the CMCs to form a rounded trailing edge of the blade or the vane.

In accordance with additional or alternative embodiments, the component is a blade outer air seal (BOAS).

According to an aspect of the disclosure, which the Applicant expressly reserves the right to claim independently, a method of forming a component of a gas turbine engine using ceramic matrix composites (CMCs) is provided. The method includes forming CMCs into an initial shape, adding an over-wrap to the initial shape, adding platform base plies, folding down platform internal plies and adding additional platform plies, executing a consolidation operation following the forming of the CMCs into the initial shape, the adding of the over-wrap and the adding of the platform base plies, the folding down of the platform internal plies and the adding of the additional platform plies and machining or cutting the CMCs during one or more of the consolidation operations to remove defects from the CMCs.

In accordance with additional or alternative embodiments, the defects include broken CMC fibers and the machining or cutting of the CMCs includes automatically identifying the defects for removal.

In accordance with additional or alternative embodiments, the machining or cutting of the CMCs includes autonomous adaptive machining.

In accordance with additional or alternative embodiments, the autonomous adaptive machining includes robotically applying a machining tool or a CNC cutting tool to an exterior surface of the CMCs.

In accordance with additional or alternative embodiments, the machining tool is configured to achieve an aerodynamically smooth finish of the exterior surface.

In accordance with additional or alternative embodiments, the machining tool includes an abrasive brush.

In accordance with additional or alternative embodiments, the method further includes sensing a force applied by the machining tool against the exterior surface and dynamically adjusting the force of the machining tool against the exterior surface.

In accordance with additional or alternative embodiments, the method further includes completing a full densification of the CMCs and re-machining or re-cutting the CMCs following the full densification.

In accordance with additional or alternative embodiments, the method further includes machining or cutting the CMCs to form a rounded trailing edge.

According to an aspect of the disclosure, a tooling assembly for forming a component of a gas turbine engine using ceramic matrix composites (CMCs) is provided. The tooling assembly includes a first apparatus configured to preform the aerodynamic component using the CMCs and for executing partial densification of the CMCs, a second apparatus configured to execute a full densification of the CMCs once a final shape of the aerodynamic component is achieved, a third apparatus configured to machine or cut the CMCs during the preforming and the executing of the partial densification and a controller coupled to the first, second and third apparatuses and configured to engage the first and third apparatuses prior to engaging the second apparatus.

In accordance with additional or alternative embodiments, the third apparatus includes a machining or cutting tool configured to machine or cut the CMCs to achieve an aerodynamically smooth surface, a robotic arm to which the machining or cutting tool is attached, the robotic arm being configured to pressure the machining or cutting tool against an exterior surface of the CMCs, a force sensor configured to measure a force applied by the machining or cutting tool to the exterior surface and the controller is configured to control the third apparatus to execute autonomous adaptive machining of the exterior surface by controlling the machining or cutting tool to identify and remove defects from the exterior surface and by controlling the robotic arm in accordance with readings of the force sensor.

### BRIEF DESCRIPTION OF THE DRAWINGS

The following descriptions should not be considered limiting in any way. With reference to the accompanying drawings, like elements are numbered alike:
FIG. 1 a partial cross-sectional illustration of a gas turbine engine according to a non-limiting embodiment;
FIG. 2 is a flow diagram illustrating a method of forming an aerodynamic component using CMCs in accordance with embodiments;
FIG. 3 is a flow diagram illustrating a method of forming an aerodynamic component using CMCs in accordance with further embodiments;
FIG. 4 is a graphical depiction of the method of FIG. 3 in accordance with further embodiments; and
FIG. 5 is a schematic illustration of a tooling assembly in accordance with embodiments.

### DETAILED DESCRIPTION

A detailed description of one or more embodiments of the disclosed apparatus and method are presented herein by way of exemplification and not limitation with reference to the Figures.

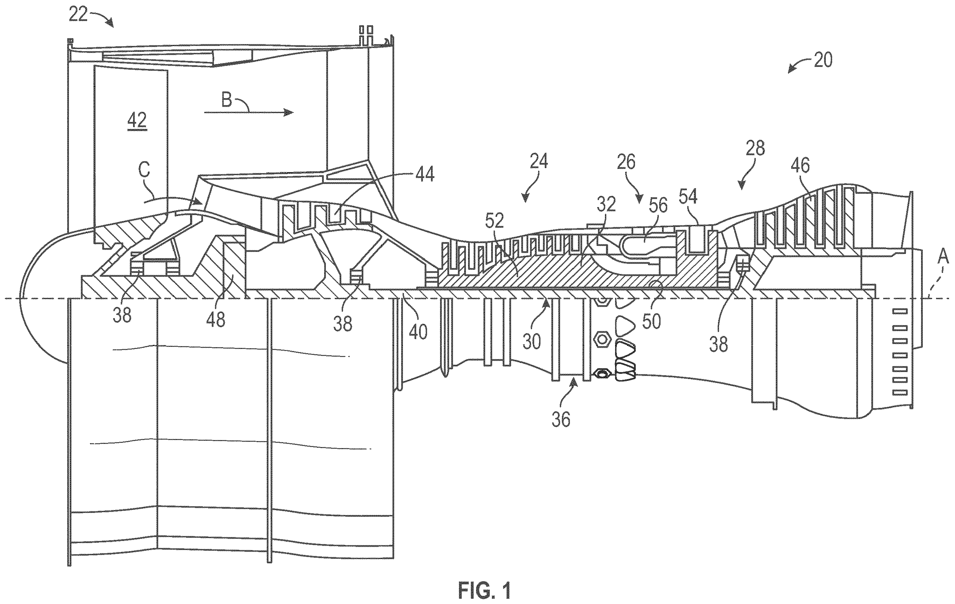

With reference now to FIG. 1, a gas turbine engine 20 is illustrated according to a non-limiting embodiment. The gas turbine engine 20 is disclosed herein as a multi-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with multi-spool turbofans as the teachings may be applied to other types of turbine engines including, for example, three-spool architectures.

The exemplary engine 20 generally includes one or more low-spool generator machines 30, referred to herein as a "low-spool" 30 and a high-spool generator machine 32, referred to herein as a "high-spool 32" mounted for rotation about an engine central longitudinal axis (A) relative to an engine static structure 36 via several bearing systems 38. It should be understood that various bearing systems 38 at various locations may alternatively or additionally be provided, and the location of bearing systems 38 may be varied as appropriate to the application.

The low-spool 30 generally includes an inner shaft 40 that interconnects a fan 42, a low-pressure compressor 44 and a low-pressure turbine 46. The inner shaft 40 is connected to the fan 42 through a speed change mechanism, which in exemplary gas turbine engine 20 is illustrated as a geared architecture 48 to drive the fan 42 at a lower speed than the low-spool 30. The high-spool 32 includes an outer shaft 50 that interconnects a high-pressure compressor 52 and high-pressure turbine 54. A combustor 56 is arranged in exemplary gas turbine 20 between the high-pressure compressor 52 and the high-pressure turbine 54. An engine static structure 36 is arranged generally between the high-pressure turbine 54 and the low-pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low-pressure compressor 44 then the high-pressure compressor 52, mixed and burned with fuel in the combustor 56, then expanded over the high-pressure turbine 54 and low-pressure turbine 46. The turbines 46, 54 rotationally drive a respective low-spool 30 and high-spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low-pressure turbine 46 has a pressure ratio that is greater than about five. In one disclosed embodiment, the engine 20 bypass ratio is greater than about ten (10:1), the fan diameter is significantly larger than that of the low-pressure compressor 44, and the low-pressure turbine 46 has a pressure ratio that is greater than about five 5:1. Low-pressure turbine 46 pressure ratio is pressure measured prior to inlet of low-pressure turbine 46 as related to the pressure at the outlet of the low-pressure turbine 46 prior to an exhaust nozzle. The geared architecture 48 may be an epicycle gear train, such as a planetary gear system or other gear system, with a gear reduction ratio of greater than about 2.3: 1. It should be understood, however, that the above parameters are only exemplary of one embodiment of a geared architecture engine and that the present disclosure is applicable to other gas turbine engines including direct drive turbofans.

While the example of FIG. 1 illustrates one example of the gas turbine engine 20, it will be understood that any number of spools, inclusion or omission of the gear system 48, and/or other elements and subsystems are contemplated. Further, rotor systems described herein can be used in a variety of applications and need not be limited to gas turbine engines for aircraft applications. For example, rotor systems can be included in power generation systems, which may be ground-based as a fixed position or mobile system, and other such applications.

As will be described below, a process is provided for forming gas turbine engine components, such as, for example only, blades, vanes, and outer air seals, for the gas turbine engine 20 of FIG. 1 for example. The process addresses the problem of correcting for broken fibers on preform CMC surfaces after initial chemical vapor infiltration (CVI) processing and prior to full densification.

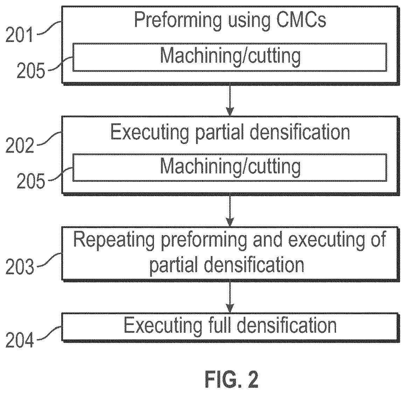

With reference to FIG. 2, a method of forming a gas turbine engine component using CMCs is provided. As shown in FIG. 2, the method includes preforming the component into an initial desired shape (e.g., a blade or a vane shape or a blade outer seal (BOAS) shape) using the CMCs (201), executing partial densification of the CMCs (202), repeating the preforming operations and the executing of the partial densification until a final desired shape of the component is achieved (203), executing a full densification of the CMCs once the final desired shape of the component is achieved (204), machining or cutting the CMCs during one or more of the performing operations, and the executing of the partial densification to remove defects from the CMCs (205).

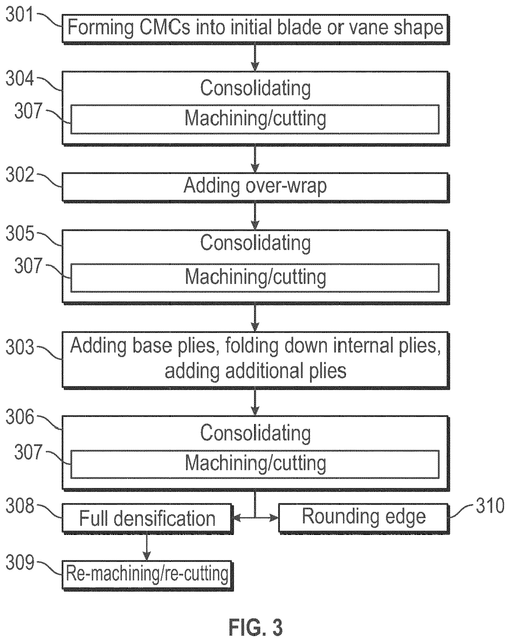

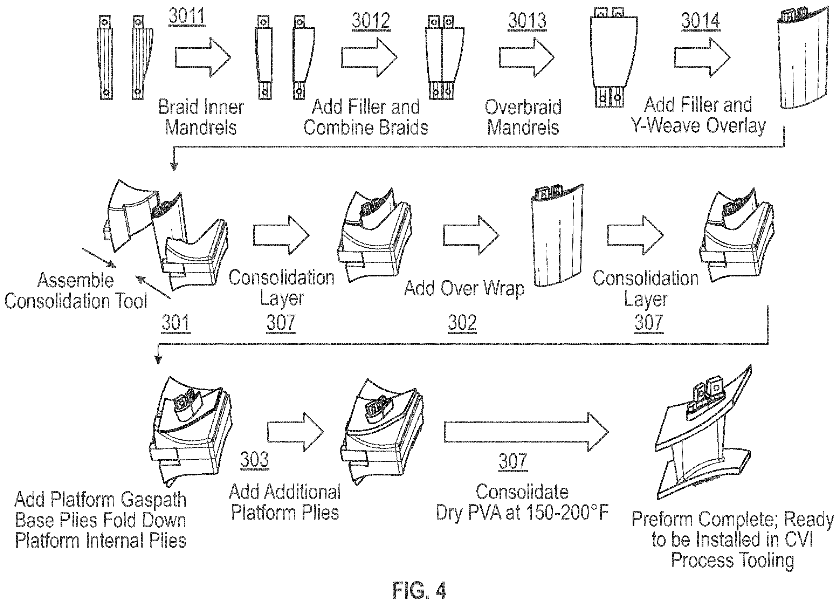

In greater detail, with reference to FIGS. 3 and 4, a method of forming a component of a gas turbine engine using CMCs is provided. While the following description will relate to the particular case of forming an airfoil, it is to be understood that this is done for purposes of clarity and brevity and is not intended to otherwise limit the scope of the application.

As shown in FIG. 3, the method includes forming CMCs into an initial airfoil shape (301) by braiding inner mandrels (3011), adding filler and combining the braids (3012), over-braiding the combined braids (3013) and adding filler and executing a Y-weave overlay (3014). The method further includes adding an over-wrap to the initial airfoil shape (302) as well as adding platform base plies, folding down platform internal plies and adding additional platform plies (303). The method also includes executing a consolidation operation following the forming of the CMCs into the initial airfoil shape (304), following the adding of the over-wrap (305) and following the adding of the platform base plies, the folding down of the platform internal plies and the adding of the additional platform plies (306). In addition, the method includes machining or cutting the CMCs during one or more of the consolidation operations of operations (304, 305 and 305) to remove defects, such as broken CMC fibers, from the CMCs (307). The machining or cutting of the CMCs of operation (307) can include automatically identifying the defects for removal.

In accordance with further embodiments, the method can also include completing a full densification of the CMCs (308) and re-machining or re-cutting the CMCs following the full densification (309) and/or re-machining or re-cutting the CMCs to form a rounded trailing edge of the blade or the vane (310).

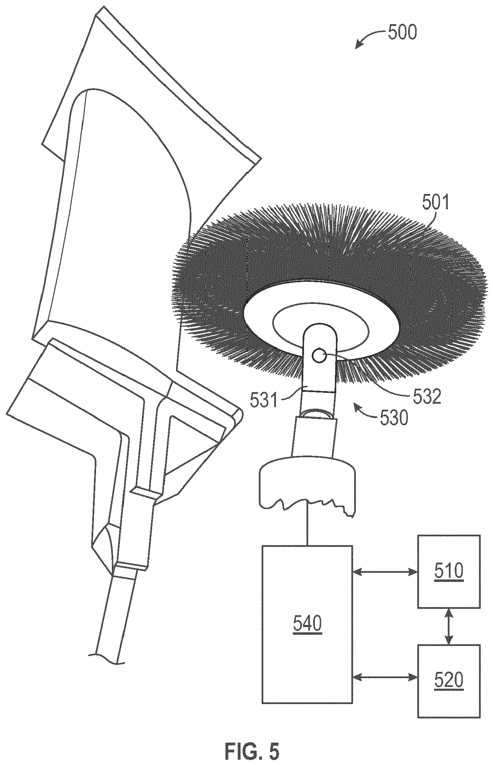

With reference to FIG. 5 and in accordance with embodiments, the machining or cutting of the CMCs of operation (307) can include autonomous adaptive machining. This can involve robotically applying a machining or cutting tool (501) to an exterior surface of the CMCs. The machining or cutting tool (501) can be configured to achieve an aerodynamically smooth finish of the exterior surface and can include or be provided as an abrasive tool, an abrasive brush and/or a CNC cutting tool. The autonomous adaptive machining can further include a sensing force applied by the machining or cutting tool (501) against the exterior surface and dynamically adjusting the force of the machining or cutting tool (501) against the exterior surface.

With continued reference to FIG. 5, a tooling assembly (500) for forming a component such as, for example only, an airfoil or a blade outer air seal of a gas turbine engine using CMCs is provided. The tooling assembly (500) includes a first apparatus configured to preform the component using the CMCs and for executing partial densification of the CMCs, a second apparatus configured to execute a full densification of the CMCs once a final shape of the gas turbine engine component is achieved, a third apparatus (530) configured to machine or cut the CMCs during the preforming and the executing of the partial densification and a controller (540). The third apparatus (530) can include the machining or cutting tool (501). The controller (540) is coupled to the first, second and third apparatuses (510, 520 and 530) and is configured to engage the first and third apparatuses (510 and 530) prior to engaging the second apparatus (520). The machining or cutting tool (501) is configured to machine or cut the CMCs to achieve an aerodynamically smooth surface of the component. The third apparatus (530) further includes a robotic arm (531) to which the machining or cutting tool (501) is attached and a force sensor (532). The robotic arm (531) is configured to apply the machining or cutting tool (501) against an exterior surface of the CMCs and the force sensor (532) is configured to measure a force applied by the machining or cutting tool (501) to the exterior surface. The controller (540) is configured to control the third apparatus (530) to execute autonomous adaptive machining of the exterior surface by controlling the machining or cutting tool (501) to identify and remove defects from the exterior surface and by controlling the robotic arm (531) in accordance with readings of the force sensor.

Technical effects and benefits of the present disclosure provide for the formation of a component for use in a gas turbine engine using CMCs with reduced defect formation prior to full densification. In so doing, yield is improved and waste is reduced.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of forming a component for use in a gas turbine engine (20) using ceramic matrix composites (CMCs), the method comprising:
preforming the component into an initial desired shape using the CMCs;
executing partial densification of the CMCs;
repeating the preforming operations and the executing of the partial densification until a final desired shape of the component is achieved;
machining or cutting the CMCs during one or more of the preforming operations and the executing of the partial densification to remove defects from the CMCs; and
executing a full densification of the CMCs.

2. The method according to claim 1, wherein the defects comprise broken CMC fibers and the machining or cutting of the CMCs comprises automatically identifying the defects for removal.

3. The method according to claim 1 or 2, wherein the machining or cutting of the CMCs comprises autonomous adaptive machining.

4. The method according to claim 3, wherein the autonomous adaptive machining comprises robotically applying a machining tool (501) or a CNC cutting tool to an exterior surface of the CMCs and the method further comprises:
sensing a force applied by the machining tool (501) against the exterior surface; and
dynamically adjusting the force of the machining tool (501) against the exterior surface.

5. The method according to claim 4, wherein the machining tool (501) is configured to achieve an aerodynamically smooth finish of the exterior surface.

6. The method according to claim 4 or 5, wherein the machining tool (501) is abrasive.

7. The method according to any preceding claim, further comprising re-machining or re-cutting the CMCs following the executing of the full densification of the CMCs.

8. The method according to any preceding claim, wherein the component is an airfoil and the method further comprises machining or cutting the CMCs to form a rounded trailing edge of the blade or the vane.

9. The method according to any of claims 1 to 7, wherein the component is a blade outer air seal (BOAS).

10. A tooling assembly (500) for forming a component of a gas turbine engine (20) using ceramic matrix composites (CMCs), the tooling assembly (500) comprising:
a first apparatus (510) configured to preform the component using the CMCs and for executing partial densification of the CMCs;
a second apparatus (520) configured to execute a full densification of the CMCs once a final shape of the component is achieved;
a third apparatus (530) configured to machine or cut the CMCs during the preforming and the executing of the partial densification; and
a controller (540) coupled to the first, second and third apparatuses (510, 520, 530) and configured to engage the first and third apparatuses (510, 530) prior to engaging the second apparatus (520).

11. The tooling assembly (500) according to claim 10, wherein:
the third apparatus (530) comprises a machining or cutting tool (501) configured to machine or cut the CMCs to achieve an aerodynamically smooth surface, a robotic arm (531) to which the machining or cutting tool (501) is attached, the robotic arm (531) being configured to pressure the machining or cutting tool (501) against an exterior surface of the CMCs, a force sensor (532) configured to measure a force applied by the machining or cutting tool (501) to the exterior surface, and
the controller (540) is configured to control the third apparatus (530) to execute autonomous adaptive machining of the exterior surface by controlling the machining or cutting tool (501) to identify and remove defects from the exterior surface and by controlling the robotic arm (531) in accordance with readings of the force sensor (532).
